# EUROPEAN PATENT APPLICATION

(11) **EP 4 068 542 A1**
(43) Date of publication of application: **05.10.2022**
(21) Application number: 22164770.4
(22) Date of filing: 28.03.2022
(51) Int. Cl.: H02G 15/013, H02G 3/06

(54) **CABLE SEALS**

(30) Priority: 31.03.2021 CN 202110352093
(71) Applicant: Suzhou Littelfuse OVS Co., Ltd., Suzhou, Jiangsu 215155 (CN)
(72) Inventor: Cheng, Du, Suzhou, 215155 (CN); Ma, Jim, Suzhou, 215155 (CN); Jin, Dan, Suzhou, 215155 (CN)
(74) Representative: Arnold & Siedsma

(57) **Abstract**

Provided is an example of a cable seal that includes a first sealing component, a second sealing component, and a folding member. The first sealing component may have a first diameter. The second sealing component may have a second diameter, where the first diameter is greater than the second diameter. The folding member may be operable to fill a space between the first sealing component and the second sealing component. The first sealing component may be operable to form a first ingress protection seal with a cable box housing fitting, the second sealing component may be operable to form a second ingress protection seal with an electrical cable, and the folding member may be operable to react to a force applied to the electrical cable by deforming in response to the force and enabling maintenance of the first ingress protection seal and the second ingress protection seal.

## Description

### FIELD

The disclosure relates generally to the field of electrical connecters and, more specifically, to cable seals for electrical cables.

### BACKGROUND

A current design of cable seals on the market are silicone rubber plugs that are secured to an electrical cable by an interference fit between the electrical cable and the plugs, which are more suitable for small-sized electrical cables. The smaller-sized electrical cables are more flexible and more easily match with the plugs to meet a desired ingress protection standard or rating. However, if larger-sized cables are being used, the position of the cable must typically be fixed, perhaps, at multiple points to provide and maintain higher-rated ingress protection standards during assembly and use.

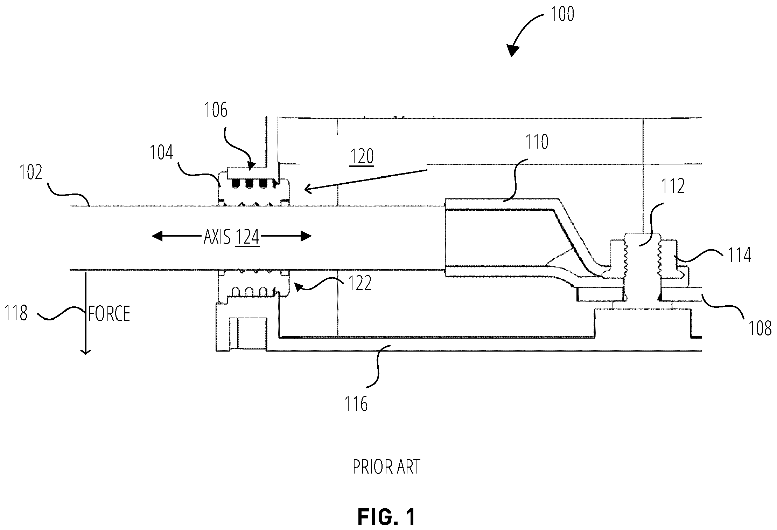

FIG. 1 illustrates a cross-sectional view of an implementation of a cable plug inserted in a housing opening.

The example of the cable plug implementation 100 shows a cable 102, a cable plug 104 and a housing 116. The cable 102 may be terminated with a terminal 110. The housing 116 may include a housing opening 106, a threaded post 112, a bolt 114 and a conductor 108. The bolt 114 may be used for securing the terminal 110 to the threaded post 112 and mating the terminal 110 to the conductor 108. The housing opening 106 is sized to fit plug 104. Plug 104 is made to encircle cable 102. When the cable 102 is maintained in a rigid position that is parallel to axis 124 (or the cable 102 remains concentric with the plug 104), the plug 104 may form a seal around the cable 102 and against the interior of the housing opening 106 that provides suitable ingress protection.

However, when a movement of the cable or cable bending motion is introduced, for example, during assembly or use, that causes a force, such as force 118, to be applied to the cable 102, the plug 104 may react by warping. For example, the plug 104 may warp in response to the force 118 and cause a rupture (at or about in the area shown by arrow 120) in the seal between the plug 104 and the interior of the housing opening 106. In addition, the force 118 may create another rupture at or about in the area shown by arrow 122 due to compression of a forward portion (at the exterior of the housing 116) of the plug 104 resulting from the downward nature of force 118. As a result of the ruptures, the ingress protection fails.

Attempts to improve ingress protection have included adding a cable cover (not shown) that surrounds the cable 102 and covers the plug 104 and the housing opening 106. Utilizing the cable cover requires additional assembly time and increases the cost of parts. However, sometimes the cable cover may be made from a plastic or metal that is sometimes too weak to resist the bending/movement of the cable 102 and therefore fails to provide adequate ingress protection.

In addition, the current cable seal designs may compression fit or snap fit into a housing opening in a housing and do not provide much flexibility to accommodate movement of the cables, particularly larger-sized cables, such as those having cross-sectional areas greater than 20 square millimeters (mm²) or larger.

The current cable seal designs are disadvantaged when used for larger-sized electrical cables because gaps between the plug and the cable, or between the plug and the housing opening, may result when the cable bends or when there is movement of the cable during assembly and use.

### BRIEF SUMMARY

This Summary is provided to introduce a selection of concepts in a simplified form that are further described below in the Detailed Description. This Summary is not intended to identify key features or essential features of the claimed subject matter, nor is it intended as an aid in determining the scope of the claimed subject matter.

In one aspect, a cable seal includes a first sealing component, a second sealing component, and a folding member. The first sealing component may include an interior surface and an exterior surface, where the interior surface forms a leakproof seal when fitted to a surface of a housing connection. The second sealing component may be operable to surround a cable and form a leakproof seal around a perimeter of the cable. The folding member may couple the first sealing component to the second sealing component and may be operable to react to a state of the cable.

In another aspect, a cable seal includes a first sealing component, a second sealing component, and a folding member. The first sealing component may have a first diameter. The second sealing component may have a second diameter, where the first diameter is greater than the second diameter. The folding member may be operable to fill a space between the first sealing component and the second sealing component. The first sealing component may be operable to form a first ingress protection seal with a cable box housing fitting, the second sealing component may be operable to form a second ingress protection seal with an electrical cable, and the folding member may be operable to react to a force applied to the electrical cable by deforming in response to the force and enabling maintenance of the first ingress protection seal and the second ingress protection seal.

### BRIEF DESCRIPTION OF THE DRAWINGS

The drawings are not necessarily to scale. The drawings are merely representations, not intended to portray specific parameters of the disclosure. The drawings are intended to depict exemplary embodiments of the disclosure, and therefore are not be considered as limiting in scope. In the drawings, like numbering represents like elements.
FIG. 1 illustrates a cross-sectional view of an implementation of a cable plug inserted in a housing opening;
FIG. 2 illustrates an isometric view of an example of a cable seal in accordance with an embodiment;
FIG. 3 illustrates a plan view of an example of a cable seal in use in accordance with another embodiment; and
FIG. 4 illustrates a cross-sectional view of the example of the cable seal from the example of FIG. 3.

### DETAILED DESCRIPTION

Various approaches in accordance with the present disclosure will now be described more fully hereinafter with reference to the accompanying drawings, where embodiments of a cable seal are shown. The cable seal(s) may be embodied in many different forms and are not be construed as being limited to the embodiments set forth herein. Instead, these embodiments are provided so this disclosure will be thorough and complete, and will fully convey the scope of the system and method to those skilled in the art. For the sake of convenience and clarity, terms such as "interior", "exterior," "top," "bottom," "upper," "lower," "vertical," "horizontal," "lateral," and "longitudinal" may be used herein to describe the relative placement and orientation of these components and their constituent parts, with respect to the geometry and orientation of a component of a semiconductor manufacturing device as appearing in the figures. The terminology will include the words specifically mentioned, derivatives thereof, and words of similar import.

Furthermore, in the following description and/or claims, the terms "on," "overlying," "disposed on" and "over" may be used in the following description and claims. "On," "overlying," "disposed on" and "over" may be used to indicate that two or more elements are in direct physical contact with each other. However, "on,", "overlying," "disposed on," and over, may also mean that two or more elements are not in direct contact with each other. For example, "over" may mean that one element is above another element but not contact each other and may have another element or elements in between the two elements. Furthermore, the term "and/or" may mean "and", it may mean "or", it may mean "exclusive-or", it may mean "one", it may mean "some, but not all", it may mean "neither", and/or it may mean "both", although the scope of claimed subject matter is not limited in this respect.

As described herein, the disclosed cable seals have performance advantages over other cable seals. To overcome deficiencies of other implementations, embodiments of the present disclosure simplify the design and manufacture of a cable seal. In some embodiments, the advantages include compatibility with cables with different positions, allowing enough space and flexibility within the cable seal for cable bending/movement while ensuring ingress protection. The disclosed cable seals provide improved ingress protection with respect to cable bending events, improved compatibility with different sized cables with no additional actions needed to adjust to different sized cables. In addition, the disclosed cable seal reduces part counts by eliminating a need of a cable cover and reduces labor time due to the ease of installation.

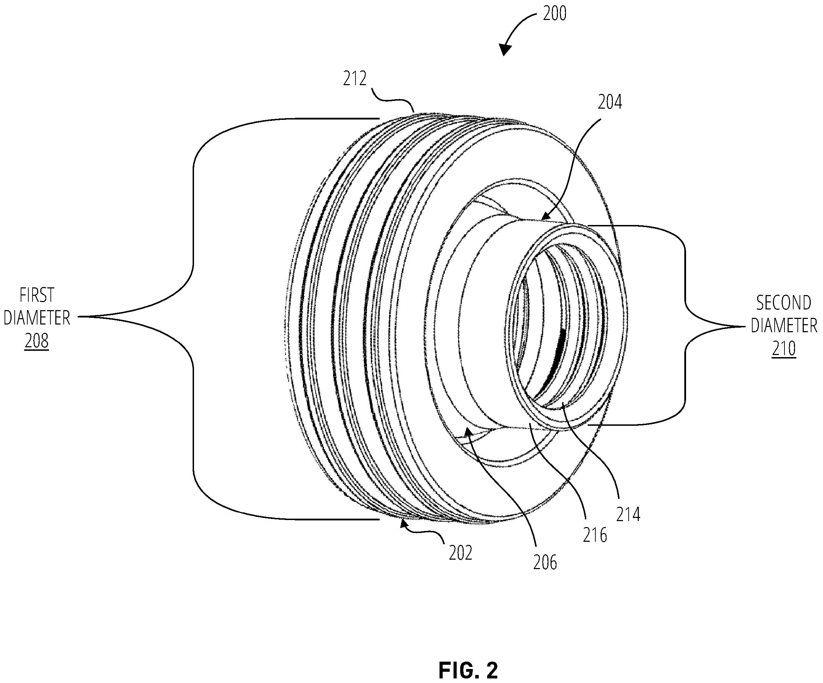

Referring now to the drawings, FIG. 2 illustrates an isometric view of an example of a cable seal in accordance with an embodiment.

The cable seal 200 may include first sealing component 202, second sealing component 204 and folding member 206. The first sealing component 202 may include an exterior surface 212 and an interior surface (that is shown in another figure). In addition, the first sealing component 202 may have a first diameter 208. Of course, the cable seal 200 may be operable to be used over the full range of cable box fittings and housing connections. Housing connections having a diameter from 12 mm to 60 mm may also be accommodated by the cable seal 200 to maintain the IP Code rating of IP67 and above. The first diameter 208 of the first sealing component 202 may be expandable to conform to a diameter of a housing connection or cable box housing fitting (shown in other examples). In addition, the first sealing component may have a diameter that is greater than a diameter of the second sealing component, when the cable seal is uncoupled from the cable and the housing connection.

The second sealing component 204 may include an interior surface 214 and an exterior surface 216 and may be circular. The interior surface 214 of the second sealing component 204 may be operable to surround a cable (shown in a later example) and form a leakproof seal around a perimeter of the cable. The second diameter 210 of the second sealing component 204 may, for example, expand to accommodate larger-sized electrical cables such as those having cross-sectional areas of equal to or greater than 20 square millimeters. Of course, the cable seal 200 may be operable to be used over the full range of cable sizes. Cables having a diameter from 6 mm to 30 mm may also be accommodated by the cable seal 200 to maintain the IP Code rating of IP67 and above. In an example, the second sealing component may be operable to surround an electrical cable having a cross sectional area of approximately 20 square millimeters to approximately 120 square millimeters.

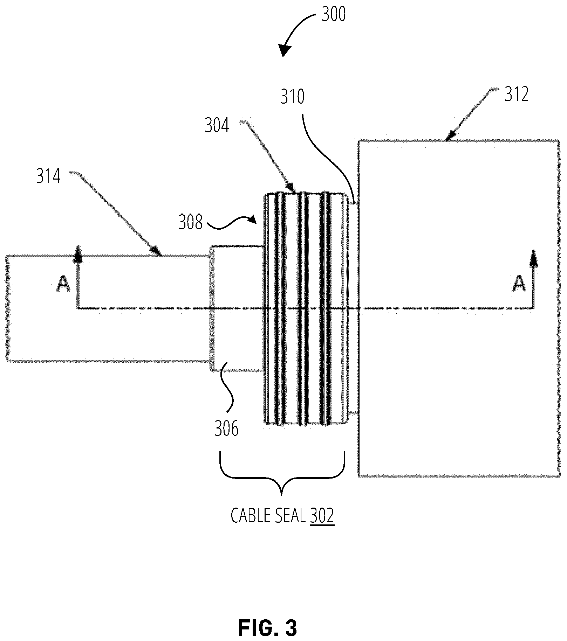

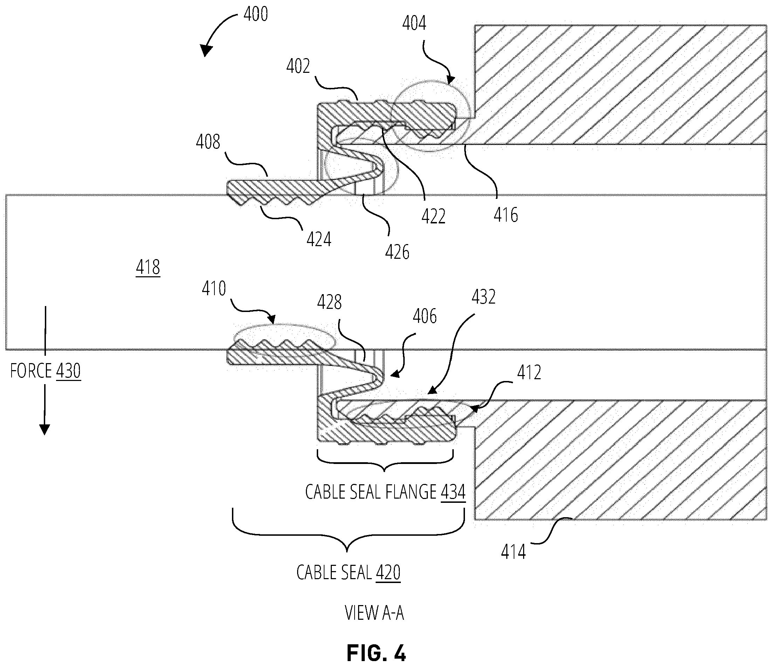

The folding member may be integrated into the first sealing component and the second sealing component. In addition, the folding member 206 may couple the first sealing component to the second sealing component and may be operable to react to a state of the cable. For example, the folding member may deform by twisting, unfolding, expanding, opening, closing, contracting or extending in response to a force applied to the cable is that is due to gravity, a bending of the cable in any direction, a pulling of the cable in any direction, a twisting of the cable, or a rotation of the cable. During the response to the applied force, the cable seal 200 maintains a leakproof seal (i.e., the ingress protection seal) at both the first sealing component 202 and the second sealing component 204. The cable seal 200 may be operable to meet the highest, or at least one of the highest, ratings approved by the Ingress Protection (IP) Code (also referred to as International Protection Code, International Electrotechnical Commission (IEC) standard 60529 or the equivalent European standard EN 60529). For example, the cable seal 200 as well as the cable seals shown in the examples of FIGs. 3 and 4 may have an IP Code 68 rating, which means the leakproof seal or ingress protection seals provided by the cable seal is a dust-tight and water immersion resistant at 1 meter or more depth for a period of time. Of course, lower ratings may also be met by the cable seal 200.

The cable seal 200 may be formed from injection molding or other similar form of manufacture. It may be beneficial to describe the cable seal with reference to other examples, such as an implementation of the cable seal in the field.

FIG. 3 illustrates a plan view of an example of a cable seal in use in accordance with another embodiment. In the cable seal environment 300, the cable seal 302 is shown fitted on a cable 314 and to a cable box housing 312. The cable seal 302 includes a first sealing component 304, a second sealing component 306 and folding member 308. The folding member 308 is between the first sealing component 304 and second sealing component 306. The first sealing component 304 is shown coupled to a housing connection 310 of the cable box housing 312 and the second sealing component 306 is shown coupled to cable 314. The first sealing component 304 may be elastic and operable to expand to surround a housing connection. Similarly, the second sealing component 306 may be elastic and be operable to surround a circumference of a circular cable.

The first sealing component 304 may be operable to expand or extend by an amount such that the first ingress protection seal is maintained at when placed over the housing connection 310, which is also referred to as the cable box housing fitting. The housing connection 310 may include detents, securing elements, such as tabs, ridges, walls, protrusions or the like, that may be gripped by an interior surface of the first sealing component 304. Additional benefits and advantages of the disclosed cable seal 302 are shown and described with reference to a cross-sectional view of the cable seal 302 along section A-A as shown in FIG. 4.

FIG. 4 illustrates a cross-sectional view of the example of the cable seal from the example of FIG. 3.

In one aspect, the cable seal 420 shown in cable seal cross-section 400 includes a first sealing component 402, a second sealing component 408 and a folding member 406. The first sealing component 402 has a first diameter (such as 208 shown in FIG. 2.) and a second diameter (such as 208 shown in FIG. 2.). In the example of FIG. 4, the first diameter is greater than the second diameter. The folding member 406 may be operable to fill a space between the first sealing component 402 and the second sealing component 408.

The first sealing component 402, the second sealing component 408 and the folding member 406 of the cable seal 420 may be formed as a single silicone rubber piece that is leakproof. The first sealing component 402 may be operable to form a first ingress protection seal 422 with a cable box housing fitting 416. Additionally, the second sealing component 408 may be operable to form a second ingress protection seal 424 with a cable 418. The first ingress protection seal 422 and the second ingress protection seal 424 may provide solid particle protection and liquid ingress protection to the components (not shown) within the cable box housing 414. Leakproof (to both liquids and particulate matter) is intended to convey the same level of ingress protection (i.e., an IP Code rating of 68 or higher) as met by the first ingress protection seal 422 and the second ingress protection seal 424, and discussed above with reference to this and other examples of FIG. 2 and 3.

In more detail, the first sealing component 402 may include a cable seal flange 434 having the interior surface 432 and the exterior surface (shown as exterior surface 212 in FIG. 2). The cable seal flange 434, for example, may be operable to engage the surface of the cable box housing fitting 416 (also referred to as housing connection in other examples). For example, the first sealing component 402 may be operable to expand to surround a perimeter of the surface of the cable box housing fitting 416 (which is also referred to as a housing connection). In an example, the cable seal flange 434 may have a length that includes a first end (e.g., closest to the cable box housing 414) and a second end (e.g., closest to the folding member 406). The first end includes a locking feature 404 and the second end forms a transition to the folding member 406.

In further detail, the first sealing component 402 of the cable seal 420 may also include a locking feature, shown generally by 404, that is operable to extend over a securing element (not shown in this example) of the cable box housing fitting 416. For example, the locking feature 404 may be an extended portion that extends around a perimeter of the first sealing component 402 and that may be operable to secure the cable seal 420 to the surface of the housing connection or cable box housing fitting 416. The locking feature 404 may provide additional support to the folding member 406. For example, the locking feature 404 may be a flange-like feature that secures the first sealing component 402 and, thus, the cable seal 420 to the cable box housing fitting 416 and the cable box housing 414. The securing element of the cable box housing fitting 416 may be a detent in the cable box housing fitting 416 operable to be filled by the locking feature 404, or may be a raised edge that the locking feature 404 extends over to prevent the cable seal 420 from being pulled away from the cable box housing 414.

The first sealing component 402 may also include first sealing component sealing features 412 that may be ridges, undulations, protrusions, bumps, saw-tooth shaped gripping features or the like, that may be integrated in the perimeter of an interior surface 432 of the first sealing component 402 and operable to form and maintain the first ingress protection seal 422. The first sealing component sealing features 412 are operable to form and maintain the first ingress protection seal 422 in response to the deformation of the folding member 406 caused due to force 430.

The second sealing component 408 may extend from the folding member 406. The second sealing component 408 may be circular, and be operable to surround a cable, such as cable 418, having a cross sectional area of approximately 20 square millimeters to approximately 120 square millimeters. The second ingress protection seal 424 may be formed by second sealing component sealing features 410 that are operable to form a leakproof seal or second ingress protection seal between the second sealing component 408 of the cable seal 420 and the cable 418. The second sealing component sealing features 410 may be ridges, undulations, protrusions, bumps, saw-tooth shaped gripping features or the like, that may be integrated in the perimeter of the surface of the second sealing component 408 that contacts the cable 418. The second sealing component sealing features 410 are operable to form and maintain the second ingress protection seal 424 in response to the deformation of the folding member 406 caused due to force 430.

The folding member 406 may be operable to react to a force applied to the cable 418 and continue to maintain the first ingress protection seal 422 and the second ingress protection seal 424. The force, such as force 430, applied to the cable may, for example, be due to gravity, a bending of the cable in any direction, a pulling of the cable in any direction, or a rotation of the cable. In addition or alternatively, the designed assembly position of the cable 418 may result in the cable 418 not being aligned concentrically with the cable seal 420 (or more particularly, the second ingress protection seal 424) when the cable seal 420 is positioned on the cable box housing fitting 416, and, in these situations, the folding member 406 alleviates the force applied due to misalignment between the cable 418 and the cable seal 420. In an example, the folding member 406 may be an expanding and contracting member that enables the first sealing component 402 and the second sealing component 408 to remain in place, while the folding member 406 reacts to an applied force to the second sealing component 408. For example, in response to the downward force 430 applied to the cable 418, the folding member 406 may be operable to deform by a first area 426 of the folding member 406 opening (or expanding) and a second area 428 of the folding member closing (or contracting). The folding member 406 may be operable to expand (e.g., open) or contract (e.g., close) in different directions, e.g., in any of 360 degrees, depending on the direction (or angle) of the applied force 430. Since the folding member 406 is circular, the folding member 406 includes other areas which gradually transition from the open first area 426 to the closed second area 428. The other areas may be around a circumference of the second sealing component 408.

While the first sealing component 402 may be shown in the examples as circular, the first sealing component 402 may be formed in other shapes such as square, oval or the like to accommodate different shaped cable box housing fittings. The form of the folding member 406 may be similarly modified to conform to the shape of the 402 to transition to a circular shape of the second sealing component 408.

While a cable has been referred to in the respective example, other objects, such as flexible conduit, fiber optic cables, and the like, may also be used with a cable seal as described herein, to advantageously maintain compliance with a leakproof requirement, or an expected IP Code rating.

Other technical features may be readily apparent to one skilled in the art from the following figures, descriptions, and claims.

The cable seals of the present disclosure advantageously allow for enhancing the capability of a cable seal to maintain ingress protection in the presence of bending or flexure of the cable. Furthermore, the cable seals described herein may advantageously maintain a seal meeting the IP Code rating assigned to the cable seal, including up to an IP Code rating of IP67 or above (for, example, IP68 or IP69K), at both the attachment of the cable seal to an cable housing connection or opening and surrounding a cable.

As used herein, an element or operation recited in the singular and proceeded with the word "a" or "an" are understood as potentially including plural elements or operations as well. Furthermore, references to "one embodiment" of the present disclosure are not intended to be interpreted as precluding the existence of additional embodiments also incorporating the recited features.

While certain embodiments of the disclosure have been described herein, it is not intended that the disclosure be limited thereto, as it is intended that the disclosure be as broad in scope as the art will allow and that the specification be read likewise. Therefore, the above description should not be construed as limiting, but merely as exemplifications of particular embodiments. Those skilled in the art will envision other modifications within the scope and spirit of the claims appended hereto.

## Claims

1. A cable seal, comprising:
a first sealing component having an interior surface and an exterior surface, wherein the interior surface forms a leakproof seal when fitted to a surface of a housing connection;
a second sealing component operable to surround a cable and form a leakproof seal around a perimeter of the cable; and
a folding member coupling the first sealing component to the second sealing component, the folding member operable to react to a state of the cable.

2. The cable seal of claim 1, the first sealing component further comprising:
a cable seal flange having the interior surface and the exterior surface, the cable seal flange operable to engage the surface of the housing connection, wherein the cable seal flange has a length that includes a first end and a second end, wherein the first end includes a locking feature and the second end forms a transition to the folding member.

3. The cable seal of claim 2, wherein the locking feature includes:
an extended portion that extends around a perimeter of the first sealing component, wherein the extended portion is operable to secure the cable seal to the surface of the housing connection.

4. The cable seal of any of the preceding claims wherein the cable seal is operable to maintain the leakproof seal around the perimeter of the cable while the folding member extends or contracts, or both.

5. The cable seal of any of the preceding claims wherein the first sealing component is elastic and operable to expand to surround the housing connection.

6. The cable seal of any of the preceding claims, wherein the folding member is integrated into the first sealing component and the second sealing component.

7. The cable seal of of any of the preceding claims, wherein:
the state of the cable changes from a first state to a second state in response to a force applied to the cable, and
the folding member is operable to react to the cable changing from the first state to the second state by deforming in response to the force applied to the cable, preferably wherein the force applied to the cable is due to gravity, a bending of the cable in any direction, a pulling of the cable in any direction, a twisting of the cable, or a rotation of the cable.

8. The cable seal of any of the preceding claims wherein:
the second sealing component is circular,
is operable to surround the cable, and
the cable has a cross sectional area of approximately 20 square millimeters to approximately 120 square millimeters.

9. The cable seal of any of the preceding claims, wherein both the first sealing component and the second sealing component are circular.

10. The cable seal of any of the preceding claims, wherein the first sealing component has a diameter that is greater than a diameter of the second sealing component, when the cable seal is uncoupled from the cable and the housing connection.

11. A cable seal, comprising:
a first sealing component having a first diameter;
a second sealing component having a second diameter, wherein the first diameter is greater than the second diameter; and
a folding member operable to fill a space between the first sealing component and the second sealing component, wherein:
the first sealing component operable to form a first ingress protection seal with a cable box housing fitting,
the second sealing component operable to form a second ingress protection seal with an electrical cable, and
the folding member operable to react to a force applied to the electrical cable by deforming in response to the force and enabling maintenance of the first ingress protection seal and the second ingress protection seal.

12. The cable seal of claim 11, with one or more of the following:
• wherein the first sealing component, the second sealing component and the folding member are formed as a single silicone rubber piece that is leakproof;
• wherein the first sealing component, when placed over the cable box housing fitting is operable to expand by an amount such that the first ingress protection seal is maintained;
• wherein the first sealing component comprises a locking feature operable to extend over a securing element of the cable box housing fitting;
• wherein the force applied to the electrical cable is due to gravity, a bending of the cable in any direction, a pulling of the electrical cable in any direction, or a rotation of the electrical cable.

13. The cable seal of any of the claims 11 or 12, wherein the folding member is operable to react to the force applied to electrical cable by deforming in response to the force applied to the electrical cable, preferably wherein the folding member, when deforming in response to the force applied to the electrical cable, is further operable to:
open at a first portion of the folding member, and
close at a second portion of the folding member.

14. The cable seal of any of the claims 11-13, wherein:
the second sealing component is circular,
is operable to surround the cable, and
the cable has a cross sectional area of approximately 20 square millimeters to approximately 120 square millimeters.

15. The cable seal of any of the claims 11-14, wherein the first ingress protection seal and the second ingress protection seal provide solid particle protection and liquid ingress protection.
